(19) Europäisches Patentamt
European Patent Office
Office européen des brevets

(11) **EP 4 597 829 A1**

(12) **EUROPEAN PATENT APPLICATION**

(43) Date of publication:
**06.08.2025 Bulletin 2025/32**

(21) Application number: **24155115.9**

(22) Date of filing: **31.01.2024**

(51) International Patent Classification (IPC):
*H02P 27/06* (2006.01)    *H02P 29/024* (2016.01)

(52) Cooperative Patent Classification (CPC):
**H02P 29/024; H02P 27/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventors:
• **Schalk, Martin**
**5202 Neumarkt am Wallersee (AT)**
• **Pointner, Stefan**
**4952 Weng im Innkreis (AT)**

(74) Representative: **Patentanwälte Pinter & Weiss OG**
**Prinz-Eugen-Straße 70**
**1040 Wien (AT)**

(54) **ELECTRICAL MOTOR ASSEMBLY WITH A MOTOR CABLE AND A METHOD FOR IDENTIFYING A MOTOR CABLE IN AN ELECTRICAL MOTOR ASSEMBLY**

(57)    In order to identify the properties of a cable (30) connecting an inverter (20) with an electrical load (40), a gate drive circuit (10) to switch at least on semiconductor switch (3) in the inverter (20) is designed to, at an excitation time point ($t_E$), set an electrical gate quantity ($U_{GE}$, $I_G$) to an identification gate quantity value ($U_{GE,I}$, $I_{G,I}$) generating an identification output voltage on the output (50) of the inverter (20) to be fed to the cable (30), at at least one detection time point ($t_D$) after the excitation time point ($t_E$), measure at least one measured value ($x_{meas}$) of at least one electrical cable quantity ($x_{cable}$), at an identification time point ($t_I$) after the detection time point (to), identify at least one cable parameter ($Z_{cab}$) of the cable (30) from the least one measured value ($x_{meas}$) and the identification gate quantity value ($U_{GE,I}$, $I_{G,I}$).

Fig. 1

EP 4 597 829 A1

Processed by Luminess, 75001 PARIS (FR)

**Description**

The present invention pertains to an electrical motor assembly comprising an inverter and a cable, the inverter having at least one semiconductor switch and a gate drive circuit, the gate drive circuit being designed to drive, in an alternating fashion, an electrical gate quantity present at a gate electrode of said semiconductor switch of the inverter between a maximum gate quantity value and a minimum gate quantity value, in order to switch the semiconductor switch to connect and/or disconnect a supply voltage to an output of the inverter for electrically supplying a load connected to the output through the cable. Further, the invention pertains to a method for identifying a motor cable in an electrical motor assembly.

In the design of modern power converters, much attention is paid to power conversion efficiency, power density, and system cost. Recently, also reliability of power electronic systems has been gaining increased attention, especially for systems with long operating hours in harsh environments.

Another aspect in today's power electronics to receive growing attention is the steady increase of switching frequencies. In this regard, significant progress has been made recently, bringing about new technologies, such as the so-called wide bandgap switches ("WBGs"), allowing for fast switching capabilities up to 10V/ns and higher, especially when compared to classical switching materials and/or classical switching technology. Unfortunately, high switching speeds are still accompanied by adverse effects, in the case of WBGs, but even more so in the case of "classical" semiconductors, such as classical insulated-gate bipolar transistors (IGBTs), classical metal-oxide-semiconductor field-effect transistor ("MOSFET"), etc. Said adverse effects range from voltage overshoot and/or voltage ringing between drain and source of a switch, as well as to deteriorated electromagnetic interference properties (EMC).

These issues are known in the prior art, cf., US 2019 / 0074827 A1, US 11,316,513 B2 or GB 2589296 A. Also in scientific literature, issues related to high-speed switching of semiconductor switches, particularly IGBT-switches, have been covered at length.

"A four-step control for IGBT switching improvement using an active voltage gate driver", Chen Li et al., Wiley, IET Power Electronics, 2021, for instance, discloses a driving circuit and a corresponding method for switching an IGBT-switch, providing a step-wise modification of a gate-source voltage in the course of changing said gate-source voltage from a minimum to a maximum value for switching the IGBT, aiming at reduced overshoot of the gate-source voltage.

"A Voltage Controlled Current Source Gate Drive Method for IGBT Devices", Lu Shu et al., IEEE, 2014, discloses a similar concept, where different modification approaches for the gate-source voltage are suggested, depending on whether the gate-source voltage is changed from a minimum to a maximum value or vice versa.

Even though the above-referenced prior art discloses highly elaborate concepts targeted at improving the performance of semiconductor switches at high switching frequencies, it turns out that these concepts especially lack the ability to take into account components surrounding the given semiconductor switches. This was found to be particularly true for the assembly mentioned at the outset, consisting of an inverter, an electrical load and a cable to connect the inverter with the electrical load. If, in such a case, the inverter comprises semiconductor switches that are switched in a high-speed fashion, the electrical quantities present in and at a switch are particularly influenced by the electrical properties of the connecting cable. For that reason, connecting cables, but also electrical loads supplied by the inverter oftentimes magnify the adverse effects mentioned above, i.e., voltage overshoot and/or voltage ringing between drain and source of a switch. These dependencies have not yet been considered in operating strategies for inverters and switches known from the prior art.

Against this background, it is an object of the invention to provide an improved gate drive circuit, particularly allowing to incorporate information on the components surrounding the gate drive circuit and switches driven by the gate drive circuit. In the scope of the present invention, the term "gate drive circuit" is to be construed broadly, representing generally an electrical circuit capable of switching a semiconductor switch, e.g., BJTs or IGBTs or FETs, which are, e.g., known to have different pins (BCE, GCE, GDS, respectively).

This object, for the assembly mentioned at the outset, is achieved in that the gate drive circuit is designed to set the electrical gate quantity to an identification gate quantity value generating an identification output voltage on the output of the inverter to be fed to the cable at an excitation time point, measure at least one measured value of at least one electrical cable quantity, at at least one detection time point after the excitation time point, and, identify at least one cable parameter of the cable from the least one measured value and the identification gate quantity value at an identification time point after the detection time point.

By directly using one of the electrical gate quantities present at the at least one semiconductor switch, a particularly efficient way of identification becomes possible, which, in addition, also allows to monitor the impact of the cable on the electrical situation in and around the switch. In methods known from the prior art, typically at least two electrical quantities in a cable have to measured, e.g. an electrical cable current and an electrical cable voltage, to be able to carry out an identification. Clearly, this requirement complicates the hardware setup, as at least two kits of measuring equipment have to be provided. In this regard, the invention allows for a simplification and reduction of cost and component outlay. Additionally, due to the fact that electrical quantities present directly at the switch are being used for cable identification, also the interaction between the cable and the semiconductor switch itself can be identified easily, and hence be taken into account, e.g., into an operating strategy of the inverter. This information benefit turns out as a significant advantage in many scenarios.

Another important advantage of the presently disclosed invention is that the identification method may be carried out by a gate drive circuit itself. Hence, no additional measuring and/or data acquisition and/or processing equipment is needed.

Further, the aforementioned object is achieved by a method for identifying a motor cable in an electrical motor assembly comprising an inverter and a cable, the inverter having at least one semiconductor switch and a gate drive circuit, the gate drive circuit being designed to drive, in an alternating fashion, an electrical gate quantity present at a gate electrode of said semiconductor switch of the inverter between a maximum gate quantity value and a minimum gate quantity value to switch the semiconductor switch in order to connect and/or disconnect a supply voltage to an output of the inverter for electrically supplying a load connected to the output through the cable, comprising the steps of, at an excitation time point, setting the electrical gate quantity to an identification gate quantity value generating an identification output voltage on the output of the inverter to be fed to the cable, at at least one detection time point after the excitation time point, measuring at least one measured value of at least one electrical cable quantity, at an identification time point after the detection time point, identifying at least one cable parameter of the cable from the least one measured value and the identification gate quantity value.

Further preferred embodiments of both the assembly and the method are described in the dependent claims.

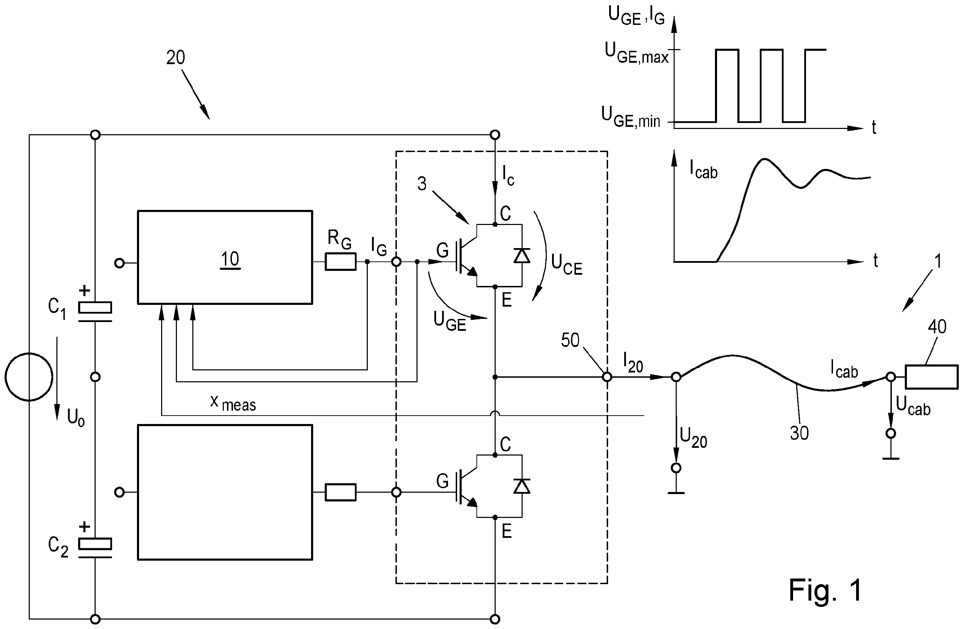

The present invention is described in greater detail below with reference to Figs.1 to 5, which show schematic and non-limiting advantageous embodiments of the invention by way of example. The specific examples described herein are only used to explain the content of the present invention and are not intended to limit the present embodiment. The following are shown:

Fig.1 an arrangement of a gate driver circuit, an inverter, a cable, and an electrical load,

Figs. 2 a close-up of an excitation and measurement signal used for cable identification,

Fig.3a, 3b, 3c, 3d possible signals occurring for different cable lengths,

Fig.4 an application of the invention in a three-phase system,

Fig.5 possible profiles of the turn on behavior of an IGBT collector-emitter voltage.

Fig.1 shows an assembly of a gate driver circuit 10, an inverter 20 comprising two semiconductor (power-)switches 3, a cable 30, an electrical load 40, an electrical source voltage Uo, and input capacitors $C_1$, $C_2$. Each semiconductor switch 3 has a gate electrode G, a collector electrode C, and an emitter electrode E. Such circuits and possible ways to operate such a circuit are known from the prior art, cf., e.g., US 9,444,448 B2.

The purpose of the gate drive circuit 10 is to drive an electrical gate quantity $U_{GE}$, $I_G$ present at a gate electrode G of the semiconductor switch 3 of the inverter 20, in order to switch the semiconductor switch 3 to eventually drive an electrical output current $I_{20}$ and/or an electrical output voltage $U_{20}$ of the inverter 20 through the cable 30 to supply the load 40. To that end, the gate drive circuit 10 comprises operating means (not shown) designed to, during operation of the inverter 20, alternate said electrical gate quantity $U_{GE}$, $I_G$ between a maximum gate quantity value $U_{GE,max}$, $I_{G,max}$ and a minimum gate quantity value $U_{GE,min}$, $I_{G,min}$ to switch the semiconductor switch 3, as is well-known in the prior art.

Said operating means are well-known from the prior art as well, and may themselves comprise semiconductor switches and, e.g., a control unit, to provide one or more control signals for switching semiconductor switches 3 as those shown in Fig.1. Within the scope of this invention, the semiconductor switches 3 are by no means restricted to a specific kind of semiconductor switch, and may be implemented in the form of an insulated-gate bipolar transistor IGBT, a bipolar junction transistor BJT, or a field-effect transistor FET.

Preferably, said electrical gate quantity $U_{GE}$, $I_G$ is an electrical voltage dropping from said gate electrode G to said emitter electrode E, or an electrical current flowing to or from the gate electrode G. By alternating the electrical gate quantity $U_{GE}$, $I_G$ between a maximum gate quantity value $U_{GE,max}$, $I_{G,max}$ and a minimum gate quantity value $U_{GE,min}$, $I_{G,min}$ (positive gate emitter voltages are typically applied to switch on a switch 3, while negative gate emitter voltages are applied to switch it off), several well-known operating methods, such as pulse-width modulation (PWM), pulse-frequency modulation (PFM), etc., may be implemented, with the aim of generating a pulsed electrical output current $I_{20}$ and/or a pulsed electrical output voltage $U_{20}$ having a pre-defined current-time-area or voltage-time-area in a pre-defined time interval, respectively. As the fundamentals of operating an electric circuit like the one shown in Fig.1, especially with regards to implementing methods as PWM, PFM etc., are well-known in the prior art, e.g., from US 2019 / 0074827 A1, US 11,316,513 B2 or GB 2589296 A, further details in this respect are spared at this point.

As mentioned earlier, concepts known from the prior art specifically lack the ability to take into account the effect and the impact of surrounding components on a semiconductor switch 3 like those shown in Fig.1. In order to overcome this deficiency, in the present invention, it is provided that the gate drive circuit 10 is designed to set the electrical gate quantity $U_{GE}$, $I_G$ to an identification gate quantity value $U_{GE,I}$, $I_{G,I}$ generating an identification output voltage $U_{20}$ on the output 50 of the inverter 20 to be fed to the cable 30 at an excitation time point $t_E$, measure at least one measured value $x_{meas}$ of at least one electrical cable quantity $x_{cable}$, at at least one detection time point $t_D$ after the excitation time point $t_E$, and, identify at least one cable parameter $Z_{cab}$ of the cable 30 from the least one measured value $x_{meas}$ and the identification gate quantity value $U_{GE,I}$, $I_{G,I}$ at an identification time point $t_I$ after the detection time point $t_D$.

By directly using one of the electrical gate quantities present at the at least one semiconductor switch 3, a particularly efficient way of identification becomes possible, which, in addition, also allows to monitor the impact of the cable 30 on the electrical situation at and in the switch 3. In methods known from the prior art, typically at least two electrical quantities in a cable have to measured, e.g. an electrical cable current $I_{cable}$ and an electrical cable voltage $U_{cable}$, to be able to carry out an identification. Clearly, this requirement complicates the hardware setup, as at least two kits of measuring equipment have to be provided.

Preferably, the at least one cable parameter $Z_{cab}$ to describe the cable may be selected from the group consisting of a cable length, a cable resistance, a cable inductance, a cable material, a cable cross section, a cable diameter, a cable capacity, and the at least one cable quantity $x_{cable}$ may be selected from the group consisting of a cable current $I_{cable}$, a cable voltage $U_{cable}$, a cable temperature, a cable magnetic field. As will be discussed at length in the following, the present invention provides for flexibility in a broad range of aspects. One example of this flexibility is the ability to select a suitable cable parameter $Z_{cable}$ from a broad range of parameters, depending on the specific needs of an operating strategy of an inverter 20 in which the cable parameter $Z_{cable}$ is used. Obviously, also more than one of the aforementioned cable parameters may be identified and followingly used for operating the semiconductor switches 3 and hence the entire assembly.

It may as well be provided that more than just one pair of measured values is taken into account for the identification process. Hence, the gate drive circuit 10 may further be designed to, at a multiple of, preferably consecutive, excitation time points $t_{E,1}$, $t_{E,2}$,..., set the electrical gate quantity $U_{GE}$, $I_G$ to a corresponding identification gate quantity values $U_{GE,I,1}$, $U_{GE,I,1}$,... at each of said excitation time points $t_{E,1}$, $t_{E,2}$,..., to measure a multiple of measured values $x_{meas}$ of the at least one electrical cable quantity $x_{cable}$ at a multiple of detection time points $t_{D,1}$, $t_{D,2}$,... corresponding to said multiple of excitation time points $t_{E,1}$, $t_{E,2}$,..., and to identify the at least one cable parameter $Z_{cab}$ of the cable 30 from the multiple of measured values $x_{meas}$ and the multiple of identification gate quantity values $U_{GE,I}$, $I_{G,I}$. The multiple of excitation time points $t_{E,1}$, $t_{E,2}$,..., are preferably separated by a pre-defined, constant sampling time, as is usual and well-known in digital data processing. However, also different concepts are conceivable, such as modifying the sampling rate, such that high sampling rates are used during transient phases and low sampling rates are used when no identification is desired, in order to save resources of the control unit of the gate drive circuit, where the identification is preferably carried out. Also, the time distances between an excitation time point $t_{E,1}$, a corresponding detection time point $t_{D,1}$ and an identification time point $t_I$ may be different and may also be varied, from time distances as short as just one sampling interval to time distance much longer.

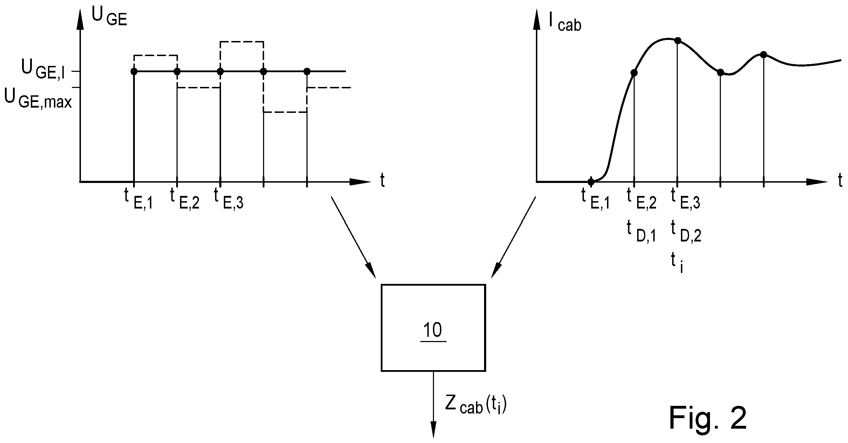

Fig.2 shows an example of such an identification process, where a step response of a cable current $I_{cable}$ is excited and then measured. The step response may be captured by two vectors comprising samples of the measured data from the gate voltage $U_{GE}$ and the cable current $I_{cable}$. To eventually arrive at the desired cable parameters, a series of well-established methods are available from, e.g., digital signal processing and/or control engineering. For instance, a transfer function may be identified from the signals $U_{GE,I}$, $I_{cab}$ shown in Fig.1, whose gain represents an impedance, from which a cable parameter $Z_{cab}$ may be calculated from. In scientific literature several monographies deal with the subject of deriving system models, like transfer functions or state space models etc., from which the desired cable parameters may be derived from, e.g., Lennart Ljung: System Identification: theory for the User. 2. Auflage. Prentice Hall, Upper Saddle River 2006, or Oliver Nelles: Nonlinear System Identification. 1. Auflage. Springer, 2000, or Rolf Isermann, Marco Münchhof: Identification of Dynamic Systems - An Introduction with Applications. 1. Auflage. Springer, 2010. Also models like a well-known ARMA model, or a (continuous or discrete) state space model may be identified in a first step, and the cable parameter may be derived from such model description. While these concepts are known in the prior art, they have not yet been applied to identifying a cable from a measured gate quantity from a semiconductor switch.

As can bee seen from Fig.2, the identification gate quantity values $U_{GE,I}$, $I_{GE,I}$, in the shown case the gate voltage $U_{GE,I}$, may be set to a value higher than the maximum gate quantity value $U_{GE,max}$ used for switching in regular operation, or may as well be set to values lower than a regular maximum gate quantity value $U_{GE,max}$, but may also be set to the same value as the the maximum gate quantity value $U_{GE,max}$, depending on the needs of a given situation.

As explained below, it can also be beneficial to keep to the gate quantity constant for periods longer than a regular switching interval, in order to, e.g., identify a step response of a cable quantity. The same is true in the case of a current, where an identification gate current may be set to the current used for switching, or to a lower or higher value.

In the case shown in Fig.2, exciting the cable 30 with a voltage step (impulse) causes a damped oscillation due to electro-magnetic energy storages present in the cable 30 (R, L, C). The measurable frequency and the damping of this oscillation depend, e.g., on the length and thus the primary line constants of the cable 30, which may eventually be calculated from the measured data so obtained. Since the impedance of the electrical load 40, e.g., the electrical load of a motor, typically is much larger than the impedance of the cable 30, the load 40 can, in most practically relevant cases, be ignored, especially in the presently relevant frequency range. However, there are use cases where an impedance of an electrical load 40 or an impedance of an electrical motor has to be taken into account specifically, because the cable impedance and the motor impedance may be of comparable value. Since a motor impedance typically is known a prior, e.g., from a data sheet, this is usually unproblematic. In such a case, a motor impedance may simply be subtracted from an identified impedance to arrive at a desired cable impedance, for example.

In the case shown in Fig.2, the gate drive circuit 10 sets the multiple of corresponding identification gate quantity values $U_{GE,I,1}$, $U_{GE,I,2}$,... to the same value in order to excite and detect a step response of the of the at least one electrical cable quantity $x_{cable}$. However, it is of course also possible to set at least two of the multiple of corresponding identification gate quantity values $U_{GE,I,1}$, $U_{GE,I,2}$,... to values different from one another, in order to excite the cable 30 at at least one pre-defined excitation frequency and to detect at least one frequency response of the at least one electrical cable quantity $x_{cable}$ at said excitation frequency.

In a fashion similar to measuring more than just one instance / sample of an electrical gate quantity and an electrical cable quantity, it is also conceivable to measure more than just one electrical cable quantity $I_{cab}$, $U_{cab}$, and hence use more than just one cable quantity for cable identification. For instance, measuring an input voltage to the cable 30 supplied by the inverter and an output voltage supplied from the cable 30 to the load 40 may be measured. To that end, the gate drive circuit 10 may be designed to detect a further measured value of at least one further electrical cable quantity at the at least one detection time point $t_D$, and identify the at least one cable parameter $Z_{cab}$ of the cable 30 from the least one measured value $x_{meas}$, the at least one further measured value $x_{meas,2}$ and the identification gate quantity value $U_{GE}$, $I_{G,I}$. Also in this case, when more than two measured variables are used, several algorithms exist that may be employed. What is crucial, however, is that within the scope of this invention, an electrical gate quantity is always used, in order to take into account the relation between gate and cable.

As an alternative to exciting and detecting a step response, several other approaches, also known from literature, may be used, e.g., frequency sweeps or chirp excitation or even random excitation signals may be used, as is indicated by the dashed line in Fig.2.

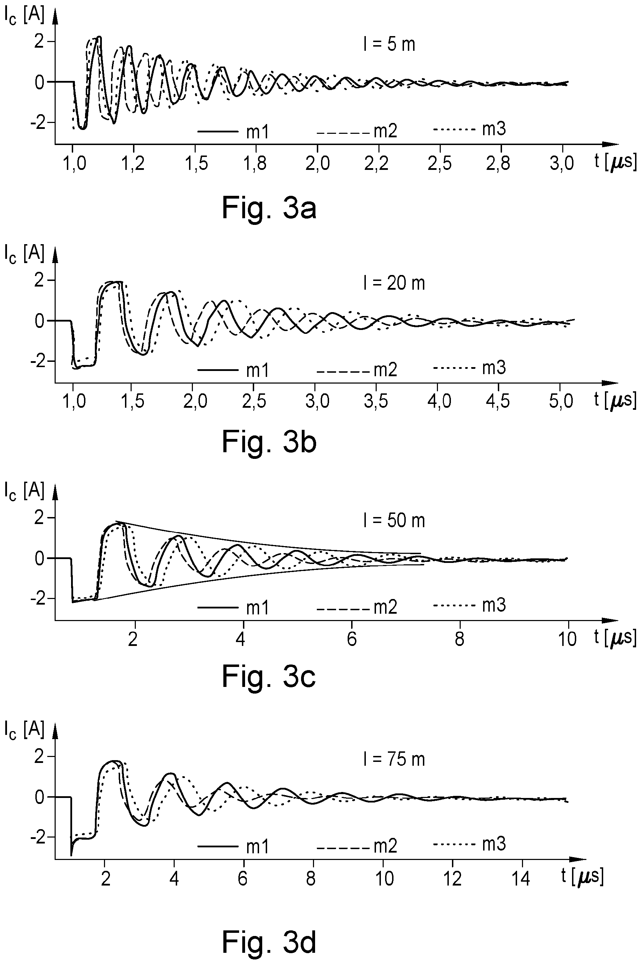

How different cable parameters $Z_{cab}$, but especially different cable lengths, influence measured signals of a cable current, is further shown in Figs.3a-3d, where a series of measurements m1, m2, m3 is shown for cable lengths of l=5m (Fig.3a), l=20m (Fig.3b), l=50m (Fig.3c) and l=75m (Fig.3d). As can be seen from these results, the oscillation frequency of the shown current oscillations decreases with increasing cable lengths. Hence, the cable length as a cable parameter $Z_{cab}$ may be computed from the frequency content contained in a measured cable-current signal, which provides a further option to carry out the invention. To obtain the frequency content, methods like FFT, DFT, or other frequency identification methods may be employed.

As mentioned previously, the invention provides great flexibility and hence allows for a series of different, advantageous embodiments. Some of those embodiments are explained hereafter. In a first, further and particularly preferred embodiment, the gate drive circuit 10 may be designed to compare a value of the at least one cable parameter $Z_{cab}$ to a pre-defined reference cable parameter value in order to diagnose the cable 30. An important option in this regard is to measure a set of different cable types and lengths in advance or extract this data from data sheets, save this data, e.g., in said control unit of the gate drive circuit, as comparison values (e.g. in the form of a look-up table) and check for consistency. In a further preferred embodiment, in this context, the gate drive circuit 10 may be designed to stop the inverter 20 in case a deviation of the value of the at least one cable parameter $Z_{cab}$ from the pre-defined reference cable parameter value exceeds or falls below a pre-defined deviation threshold.

In another embodiment, the gate drive circuit 10 may be designed to identify the at least one cable parameter $Z_{cab}$ before a start of operation of the inverter 20. In this fashion, a cable identification procedure can initially be triggered automatically by the gate drive circuit 10 or by manual command. Before operation in the present context means before the inverter start supplying the load 40 via the cable, i.e., before an energy conversion process in the load is initiated, by, e.g., converting electrical energy into mechanical energy, as is the case in electrical machinery.

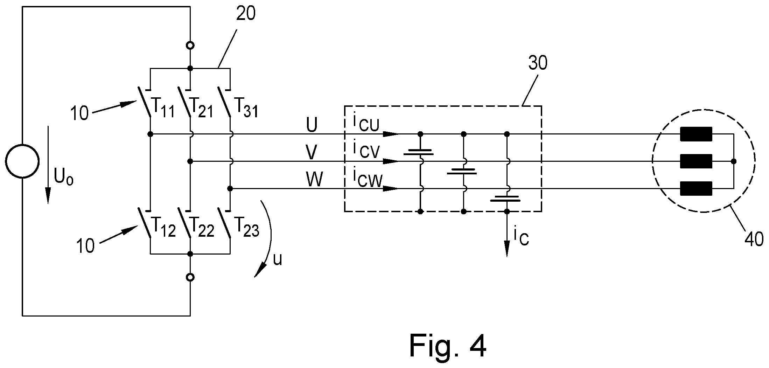

A further important use case of the present invention are three-phase systems, like the one shown in Fig.4, which allows for a particularly advantageous embodiment of the present invention. Specifically, within the scope of the invention, a so-called 0-PWM operation may be employed in this case, where the upper switches T11, T21, T31 are each switched simultaneously, and also the lower switches are all switched simultaneously. In this case, it was found that the voltages u being fed to the lines and the sum of the capacitive currents ic= $i_{CU}$+ $i_{CV}$+ icw present in the three phases U,V,W are related by the equation

$$i_C = (C_U + C_V + C_W) \cdot \frac{du}{dt}$$

out of which for instance the cable capacitances may be computed easily.

An additional benefit when using PWM is that by the means of constant PWM operation, a ripple DC current in the cable phases U, V, W is achieved. In this scenario, the current is primarily dependent on the switching frequency, the inductance and the DC resistance of the overall system, consisting of cable and motor. In addition to the cable, the current will be set primarily on the basis of the motor parameters that dominate in the low-frequency range. As the motor parameters must be known in order to operate the system, it is possible to determine the cable parameters by measuring the ripple current accordingly.

The identification process according to the invention can be used in any classic electrical motor assembly ("drive system"), consisting of an inverter ("drive"), a motor cable and a motor. Precise knowledge about the connecting cable enables a series of advantageous functionalities, of which some are mentioned in the following. If the switching behavior of the inverter can be changed during operation, it can be optimized for the specific application (EMC emissions, switching losses, compliance with the dv/dt load on the motor), based on information about the cable. This allows the efficiency of the entire system to be increased and the service life of the individual components (e.g. motor) to be extended. Further, diagnosis of whether a permissible motor cable is connected can be carried out, and, if necessary, a warning or error (e.g. cable too long / cross-section too small) may be output, in case a wrong component, i.e., a wrong cable or a wrong motor are in fact connected. By identifying the cable parameters and length, it can be ensured that operation only takes place with cables approved for the application or that the operation of the entire system can be optimized in terms of efficiency if the switching behavior of the drive can be changed during operation.

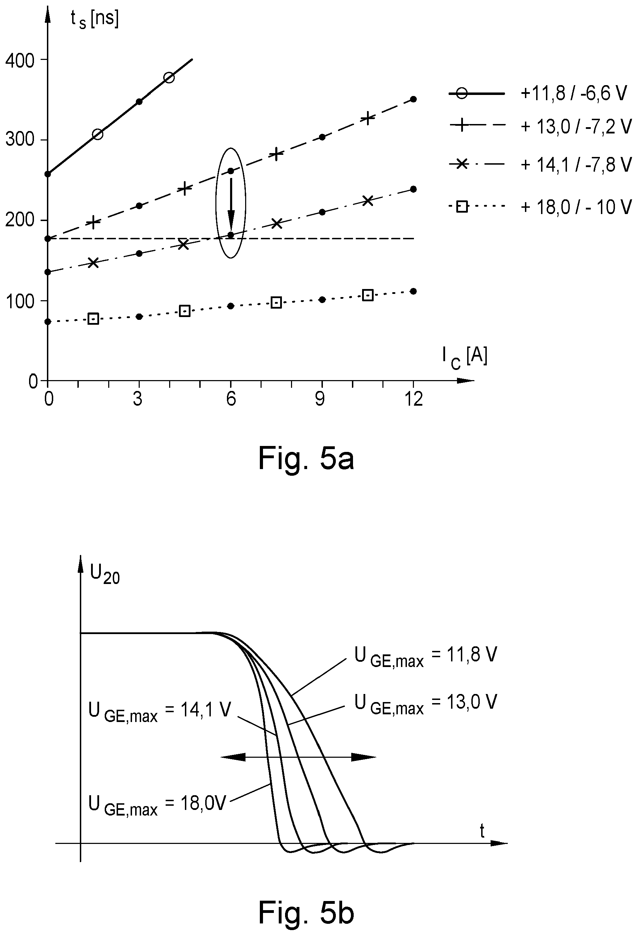

How the information on a cable gathered in the course of this invention may eventually be used to modify the operating strategy of the gate drive circuit will be discussed below by means of Figs.5a, 5b. In the course of the invention, it was found that especially the properties of the cable 30 have a crucial impact on the performance metrics of a gate drive circuit 10, such as (power) losses, EMC, dynamical and transient behavior of output quantities like $U_{20}$ and/or $I_{20}$, etc., as will be explained in the following, on the basis of Figs. 5a and 5b.

To that end, Fig. 5a presents possible switching times ts of a semiconductor switch 3, in the case shown the switching times of an IGBT, as a function of the collector current Ic. To a significant part, the collector current Ic depends on the effective impedance of a cable 30. It was found that the time ts it takes to switch the semiconductor switch 3, i.e., to complete the transition from entirely closed to entirely open, varies with the collector current $I_C$ drawn from the semiconductor switch 3, and hence with the cable impedance that impacts the collector current. Varying switching times ts, however, are problematic, for several reasons. On the one hand, large switching times and thus slow switching, for obvious reasons, increases switching losses, already because the switching processes takes longer, leading to longer periods of time where both the current flowing through the switch as well as the voltage dropping over the switch are unequal zero. On the other hand, small switching times and thus high switching speeds lead to fast changes of the involved electrical quantities, leading to increased electromechanical radiation and thus worsened EMC properties. It is thus important to select an optimized switching time ts for a given application and hence a given cable 30.

Fig.5b, on the contrary, shows time profiles of an output voltage $U_{20}$ produced by an inverter 20 as shown in Fig.1, for different maximum values of the gate-emitter voltage $U_{GE}$. With a higher voltage, the gate charge required to switch the semiconductor switch 3, in this case an IGBT, is applied more quickly, thus reducing the switching time ts. For the switching process, it can thus be stated that switching times ts can be reduced when larger gate-emitter voltages $U_{GE}$ are being employed.

Combining the findings presented in Figs.5a and 5b, one may conclude that a change in switching speed due to a changed collector current $I_C$ may be compensated by adjusting the gate supply and hence the gate-emitter voltages $U_{GE}$. An increase in switching times at higher operating currents Ic can hence be compensated for by adjusting $U_{GE}$ based on information on the connecting cable 30, in order to maintain an optimized switching time ts.

Specifically, to that end, the gate drive circuit 10 may be designed to, at an adjustment time point during operation of the inverter 20 after the identification time point $t_I$, adjust said maximum gate quantity value $U_{GE,max}$, $I_{G,max}$ to an adjusted maximum gate quantity value $U_{max,A}$, $I_{max,A}$ depending on the at least one identified cable parameter $Z_{cab}$, to further alternate said electrical gate quantity $U_{GE}$, $I_G$ between said adjusted maximum gate quantity value $U_{max,A}$, $I_{max,A}$ and said minimum gate quantity value $U_{GE,min}$, $I_{G,min}$ to switch the semiconductor switch 3. In a further preferred embodiment, the maximum gate quantity value $U_{GE,max}$, $I_{G,max}$ is pre-set before a start of operation of the inverter 20 and adjusted to said adjusted maximum gate quantity value $U_{max,A}$, $I_{max,A}$ depending on the at least one identified cable parameter $Z_{cab}$ during operation of the inverter 20 at the adjustment time point $t_A$. In a further preferred embodiment, the gate drive circuit 10 comprises operating means for switching the semiconductor switch 3 and detecting means 11 for measuring the at least one measured value $x_{meas}$ of the at least one electrical cable quantity $x_{cable}$.

**Claims**

1. Assembly (1) comprising an inverter (20) and a cable (30), the inverter (20) having at least one semiconductor switch (3) and a gate drive circuit (10), the gate drive circuit (10) being designed to drive, in an alternating fashion, an electrical gate quantity ($U_{GE}$, $I_G$) present at a gate electrode (G) of said semiconductor switch (3) of the inverter (20) between a maximum gate quantity value ($U_{GE,max}$, $I_{G,max}$) and a minimum gate quantity value ($U_{GE,min}$, $I_{G,min}$) to switch the semiconductor switch (3) in order to connect and/or disconnect a supply voltage (Uo) to an output of the inverter (20) for electrically supplying a load (40) connected to the output (50) through the cable (30), **characterized in that** the gate drive circuit (10) is further designed to

   - at an excitation time point ($t_{E,1}$), set the electrical gate quantity ($U_{GE}$, $I_G$) to an identification gate quantity value ($U_{GE,I}$, $I_{G,I}$) generating an identification output voltage on the output (50) of the inverter (20) to be fed to the cable (30),
   - at at least one detection time point ($t_{D,1}$) after the excitation time point ($t_{E,1}$), measure at least one measured value ($x_{meas}$) of at least one electrical cable quantity ($x_{ca-ble}$),
   - at an identification time point ($t_I$) after the detection time point ($t_D$), identify at least one cable parameter ($Z_{cab}$) of the cable (30) from the least one measured value ($x_{meas}$) and the identification gate quantity value ($U_{GE,I}$, $I_{G,I}$).

2. Assembly (1) according to claim 1, **characterized in that** the at least one cable parameter ($Z_{cab}$) is selected from the group consisting of a cable length, a cable resistance, a cable inductance, a cable material, a cable cross section, a cable diameter, a cable capacity, **and in that** the at least one cable quantity ($x_{cable}$) is selected from the group consisting of a cable current ($I_{cable}$), a cable voltage ($U_{cable}$), a cable temperature, a cable magnetic field.

3. Assembly (1) according to any one of claims 1 or 2, **characterized in that** the gate drive circuit (10) is further designed to, at a multiple of, preferably consecutive, excitation time points ($t_{E,1}$, $t_{E,2}$,...), set the electrical gate quantity ($U_{GE}$, $I_G$) to a corresponding identification gate quantity values at each of said excitation time points ($t_{E,1}$, $t_{E,2}$,...), to measure a multiple of measured values ($x_{meas}$) of the at least one electrical cable quantity ($x_{cable}$) at a multiple of detection time points ($t_{D,1}$, $t_{D,2}$,...) corresponding to said multiple of excitation time points ($t_{E,1}$, $t_{E,2}$,...), and to identify the at least one cable parameter ($Z_{cab}$) of the cable (30) from the multiple of measured values ($x_{meas}$) and the multiple of identification gate quantity values.

4. Assembly (1) according to claim 3, **characterized in that** the gate drive circuit (10) is further designed to set the multiple of corresponding identification gate quantity values to the same value in order to detect a step response of the of the at least one electrical cable quantity (Xcable).

5. Assembly (1) according to claim 3, **characterized in that** the gate drive circuit (10) is further designed to set at least two of the multiple of corresponding identification gate quantity values to values different from one another, in order to excite the cable (30) at at least one pre-defined excitation frequency and to detect at least one frequency response of the of the at least one electrical cable quantity ($x_{cable}$) at said excitation frequency.

6. Assembly (1) according to any one of the preceding claims, **characterized in that** the gate drive circuit (10) is further designed to detect a further measured value of at least one further electrical cable quantity at the at least one detection time point ($t_D$), and to identify the at least one cable parameter ($Z_{cab}$) of the cable (30) from the least one measured value ($x_{meas}$), the at least one further measured value and the identification gate quantity value ($U_{GE,I}$, $I_{G,I}$).

7. Assembly (1) according to any one of the preceding claims, **characterized in that** the gate drive circuit (10) is further designed to compare a value of the at least one cable parameter ($Z_{cab}$) to a pre-defined reference cable parameter value in order to diagnose the cable (30).

8. Assembly (1) according to any one of the preceding claims, **characterized in that** the gate drive circuit (10) is further designed to stop the inverter (20) in case a deviation of the value of the at least one cable parameter ($Z_{cab}$) from the pre-defined reference cable parameter value exceeds or falls below a pre-defined deviation threshold.

9. Assembly (1) according to any one of the preceding claims, **characterized in that** the gate drive circuit (10) is further designed to identify the at least on least one cable parameter ($Z_{cab}$) before a start of operation of the inverter (20).

10. Assembly (1) according to any one of the preceding claims, **characterized in that** the gate drive circuit (10) is further designed to identify the at least on least one cable parameter ($Z_{cab}$) during operation of the inverter (20).

11. Assembly (1) according to claim 10, **characterized in that** the gate drive circuit (10) is further designed to, at an adjustment time point during operation of the inverter (20) after the identification time point ($t_I$),

adjust said maximum gate quantity value ($U_{GE,max}$, $I_{G,max}$) to an adjusted maximum gate quantity value depending on the at least one identified cable parameter ($Z_{cab}$), to further alternate said electrical gate quantity ($U_{GE}$, $I_G$) between said adjusted maximum gate quantity value and said minimum gate quantity value ($U_{GE,min}$, $I_{G,min}$) to switch the semiconductor switch (3).

12. Assembly (1) according to claim 11, **characterized in that** the maximum gate quantity value ($U_{GE,max}$, $I_{G,max}$) is pre-set before a start of operation of the inverter (20) and adjusted to said adjusted maximum gate quantity value depending on the at least one identified cable parameter ($Z_{cab}$) during operation of the inverter (20) at the adjustment time point.

13. Assembly (1) according to any one of the preceding claims, **characterized in that** the gate drive circuit (10) comprises operating means for switching the semiconductor switch (3) and detecting means (11) for measuring the at least one measured value ($x_{meas}$) of the at least one electrical cable quantity ($x_{cable}$).

14. A method for identifying a motor cable (30) in an electrical motor assembly (1) comprising an inverter (20) and a cable (30), the inverter (20) having at least one semiconductor switch (3) and a gate drive circuit (10), the gate drive circuit (10) being designed to drive, in an alternating fashion, an electrical gate quantity ($U_{GE}$, $I_G$) present at a gate electrode (G) of said semiconductor switch (3) of the inverter (20) between a maximum gate quantity value ($U_{GE,max}$, $I_{G,max}$) and a minimum gate quantity value ($U_{GE,min}$, $I_{G,min}$) to switch the semiconductor switch (3) in order to connect and/or disconnect a supply voltage (Uo) to an output (50) of the inverter (20) for electrically supplying a load (40) connected to the output (50) through the cable (30), comprising the steps of

- at an excitation time point ($t_{E,1}$), setting the electrical gate quantity ($U_{GE}$, $I_G$) to an identification gate quantity value ($U_{GE,I}$, $I_{G,I}$) generating an identification output voltage on the output (50) of the inverter (20) to be fed to the cable (30),
- at at least one detection time point ($t_{D,1}$) after the excitation time point ($t_{E,1}$), measuring at least one measured value ($x_{meas}$) of at least one electrical cable quantity ($x_{ca-ble}$),
- at an identification time point ($t_I$) after the detection time point ($t_D$), identifying at least one cable parameter ($Z_{cab}$) of the cable (30) from the least one measured value ($x_{meas}$) and the identification gate quantity value ($U_{GE,I}$, $I_{G,I}$).

Fig. 1

Fig. 2

Fig. 3a

Fig. 3b

Fig. 3c

Fig. 3d

Fig. 4

Fig. 5a

Fig. 5b

Europäisches
Patentamt

European
Patent Office

Office européen
des brevets

## EUROPEAN SEARCH REPORT

Application Number

EP 24 15 5115

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 477 843 A1 (HITACHI INDUSTRY EQUIPMENT SYSTEMS CO LTD [JP]) 1 May 2019 (2019-05-01) | 1-4, 7-10,13, 14 | INV. H02P27/06 H02P29/024 |
| Y | * abstract; figures 1-13 * | 6,11,12 | |
| A | * paragraph [0013] - paragraph [0039] * | 5 | |
| | ----- | | |
| Y | HENN JOCHEN ET AL: "Intelligent Gate Drivers for Future Power Converters", IEEE TRANSACTIONS ON POWER ELECTRONICS, INSTITUTE OF ELECTRICAL AND ELECTRONICS ENGINEERS, USA, vol. 37, no. 3, 14 September 2021 (2021-09-14), pages 3484-3503, XP011891232, ISSN: 0885-8993, DOI: 10.1109/TPEL.2021.3112337 [retrieved on 2021-12-01] * abstract * * page 3485 - page 3491 * | 6,11,12 | |
| | ----- | | |
| A | PATRICK XIE ET AL: "Electric drive systems with long feeder cables", IET ELECTRIC POWER APPLICATIONS, IET, UK, vol. 14, no. 1, 5 December 2019 (2019-12-05), pages 16-30, XP006101628, ISSN: 1751-8660, DOI: 10.1049/IET-EPA.2018.5507 * abstract * * page 21 - page 28 * | 1-14 | **TECHNICAL FIELDS SEARCHED (IPC)** H02P |
| | ----- | | |

The present search report has been drawn up for all claims

| Place of search | Date of completion of the search | Examiner |
|---|---|---|
| Munich | 12 July 2024 | Zeng, Wenyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 5115

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2024

| Patent document cited in search report | | Publication date | Patent family member(s) | | Publication date |
|---|---|---|---|---|---|
| EP 3477843 | A1 | 01-05-2019 | CN | 109247050 A | 18-01-2019 |
| | | | EP | 3477843 A1 | 01-05-2019 |
| | | | JP | 6714448 B2 | 24-06-2020 |
| | | | JP | 2017229172 A | 28-12-2017 |
| | | | WO | 2017221453 A1 | 28-12-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190074827 A1
- US 11316513 B2
- GB 2589296 A
- US 9444448 B2

**Non-patent literature cited in the description**

- A four-step control for IGBT switching improvement using an active voltage gate driver". **CHEN LI et al.** IET Power Electronics. Wiley, 2021
- **LU SHU et al.** A Voltage Controlled Current Source Gate Drive Method for IGBT Devices. IEEE, 2014
- **LENNART LJUNG**. System Identification: theory for the User. Prentice Hall, 2006
- **OLIVER NELLES**. Nonlinear System Identification. Springer, 2000
- **ROLF ISERMANN** ; **MARCO MÜNCHHOF**. Identification of Dynamic Systems - An Introduction with Applications. Springer, 2010